(19)

Europäisches
Patentamt
European
Patent Office
Office européen
des brevets

(11) **EP 4 480 564 A1**

(12) **EUROPEAN PATENT APPLICATION**

(43) Date of publication:
**25.12.2024 Bulletin 2024/52**

(21) Application number: **23180771.0**

(22) Date of filing: **21.06.2023**

(51) International Patent Classification (IPC):
***B01D 19/04*** (2006.01)       ***D21C 3/28*** (2006.01)
***D21H 21/12*** (2006.01)

(52) Cooperative Patent Classification (CPC):
**B01D 19/0404; D21C 3/28; D21H 21/12**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Sasol Chemie GmbH & Co. KG
20537 Hamburg (DE)**

(72) Inventors:
• **Scherf, Sabine
25524 Itzehoe (DE)**

• **Boddien, Albert
25524 Itzehoe (DE)**
• **Köster, Petra
25541 Brunsbüttel (DE)**
• **Rosenberg, Britta
45772 Marl (DE)**
• **Gelissen, Arjan
45721 Haltern am See (DE)**

(74) Representative: **Müller Schupfner & Partner
Patent- und Rechtsanwaltspartnerschaft mbB
(Hamburg)
Schellerdamm 19
21079 Hamburg (DE)**

(54) **FATTY ALCOHOL-BASED DEFOAMER COMPOSITIONS WITH IMPROVED STABILITY**

(57)    This invention relates to fatty alcohol-based defoamer compositions with improved stability. More particularly, the invention relates to a defoamer composition which comprises 20 to 40wt% of a fatty alcohol mixture, 0.1 to 5wt% of an emulsifier, 0.01 to 1wt% of a thickener, based on the total weight of the emulsion deaerator, and water making up the remainder at of the defoamer composition to 100wt%. The invention extends to a method for mitigating foaming in an aqueous system, and to the use of the defoamer composition to mitigate foaming in an aqueous system.

EP 4 480 564 A1

**Description**

This invention relates to fatty alcohol-based defoamer compositions with improved stability.

BACKGROUND OF THE INVENTION

Entrained air and surface foam can cause a variety of quality, production, and environmental problems in industrial operations. Deaerators are used to combat these problems. Deaerators reduce the amount of entrained air, and this reduces or eliminates foaming.

An example of an industrial application where foaming is problematic is in paper production. In paper production, a pulp slurry is used which is prone to foaming. Deaerators are added to the pulp slurry to reduce unwanted foaming. The deaerators act as defoamers and vice versa.

Fatty alcohols and surfactants are widely used to formulate water-based defoamer compositions. These defoamer compositions are typically produced and stored as concentrates in the form of dispersions or emulsions, and then diluted for use. However, defoamer composition concentrates based on long chain alcohols (fatty alcohols), for example behenyl alcohol (C22 alcohol), often lack long term stability. Separation occurs during storage of such defoamer compositions, and then the defoamer compositions have be discarded or have to be worked-up. Moreover, defoamer compositions should have a suitable viscosity profile, be stable under shear stress, and be easy to dose.

Besides reducing or eliminating foaming, defoamer compositions for use in commercial applications, such as in paper pulp processing, should have the following preferred characteristics:

(a) have high emulsion stability or high dispersion stability over time;
(b) are pumpable (i.e., are liquid or viscous liquid, but not paste or gel), and generally lower viscosity liquids are preferred (e.g., to save energy for the pumps and thus save costs);
(c) exhibit low or no shear hysteresis (i.e., have high shear stability); and
(d) have a slow separation speed.

Therefore, there is a need to formulate a defoamer composition based on the commercially preferred long-chain fatty alcohols that at least shows an improvement in one or more of the above characteristics, relative to the presently commercially used defoamers.

DESCRIPTION OF THE INVENTION

The inventors have surprisingly found that a defoamer composition comprising:

(a) 20 to 40wt% of a fatty alcohol mixture, based on the total weight of the defoamer composition, the fatty alcohol mixture comprising

25 to 35wt% C18 alcohol,
30 to 45wt% C20 alcohol, and
25 to 45wt% C22 alcohol,
each based on the total weight of the fatty alcohol mixture;

(b) 0.1 to 5wt% of an emulsifier, based on the total weight of the defoamer composition;
(c) 0.01 to 1wt% of a thickener, based on the total weight of the defoamer composition; and
(d) water making up the remainder of the defoamer composition to 100wt%; results in at least improved formulation stability and less separation, compared to defoamer compositions of the prior art, such as those based on natural behenyl alcohols.

In this specification, "wt%" is a shortened form of "weight percentage". The skilled person will appreciate that the weight percentage of each of the components (including optional and/or unnamed components) in the defoamer composition, in the fatty alcohol mixture, or in other mixture(s) referred to, would be selected such that the total weight percentage of all the components combined always adds up to 100wt%.

The defoamer composition of the present invention also acts as a deaerator and may thus be used for deaeration as well as for defoaming.

The "fatty alcohols" of the present invention are defined as primary alcohols having at least 6 carbon atoms and a single alcohol group (-OH). They have an acyclic aliphatic hydrocarbyl group that may be saturated, unsaturated, linear and/or branched. This definition is also applied to the "fatty alcohol mixture".

According to one embodiment of the invention the defoamer composition comprises a fatty alcohol mixture comprising selected alcohols from natural sources and from Ziegler synthesis.

The defoamer composition may comprise water in an amount of at least 10wt% based on the total weight of the defoamer composition or may comprise water in an amount of at least 20wt% based on the total weight of the defoamer composition.

The fatty alcohol mixture may comprise or consist of:

10 to 90wt% fatty alcohol(s) from natural sources; and
90 to 10wt% fatty alcohol(s) from Ziegler synthesis,

based on the total weight of the fatty alcohol mixture.

At least one of the C18 alcohol, the C20 alcohol, and the C22 alcohol of the fatty alcohol mixture may be a primary, saturated, and linear alcohol. Preferably, all three of the C18, the C20 and the C22 alcohol of the fatty alcohol mixture are primary, saturated, and linear alcohols.

Preferably, the fatty alcohol mixture comprises:

25 to 35wt% C18 primary, saturated, and linear alcohol;
30 to 45wt% C20 primary, saturated, and linear alcohol; and
25 to 45wt% C22 primary, saturated, and linear alcohol,

based on the total weight of the fatty alcohol mixture.

More preferably, the fatty alcohol mixture comprises:

27 to 33wt% C18 primary, saturated, and linear alcohol;
33 to 41wt% C20 primary, saturated, and linear alcohol; and
30 to 38wt% C22 primary, saturated, and linear alcohol,

based on the total weight of the fatty alcohol mixture.

The defoamer composition may be present in the form of a dispersion, where at least the water is in the continuous phase and at least the fatty alcohols are in the dispersed phase.

In a preferred embodiment, the dispersed phase consists of or comprises the fatty alcohol mixture in a particulate solid form at least up to 50°C.

The fatty alcohol dispersion may comprise:

10 to 30wt% of the fatty alcohol mixture; and
90 to 70wt% water, based on the total weight of the fatty alcohol dispersion.

The fatty alcohol mixture may have a solidification point measured according to the Shukoff method in the range of from 50°C to 70°C, preferably in the range of from 50°C to 60°C, most preferably in the range of from 54°C to 58°C.

Preferably, the fatty alcohol from natural sources is a fatty alcohol mixture from natural sources. The fatty alcohol mixture from natural sources may comprise C6 to C28 alcohols. Preferably, the natural fatty alcohol mixture from natural sources comprises predominantly C18 to C22 alcohols, based on the total weight of the natural fatty alcohol mixture.

The fatty alcohol mixture from natural sources may comprise primary, saturated, and linear fatty alcohols.

Examples of such primary, saturated, and linear fatty alcohols are palmityl alcohol, cetyl alcohol, cetearyl alcohol, stearyl alcohol, arachidyl alcohol, behenyl alcohol, lignoceryl alcohol, 1-hexacosanol, 1-octacosanol alcohol, or mixtures thereof.

Preferably, the fatty alcohol mixture from natural sources comprises predominantly C18 to C22 linear alcohols. More preferably, the natural fatty alcohol mixture comprises predominantly C18 to C22 linear primary alcohols (greater 50wt%), based on the total weight of the natural fatty alcohol mixture.

The fatty alcohol mixture from natural sources may have a solidification point of 50°C or more measured according to the Shukoff method.

The fatty alcohol mixture from natural sources may be prepared by hydrogenation of natural fatty acids and/or natural fatty acid methyl esters.

According to one preferred embodiment of the invention, the fatty alcohol(s) from natural sources is (are) derived from natural triglycerides being tri-esters consisting of a glycerol bound to three fatty acids, more specifically from the hydrogenation of these fatty acids and/or the methyl esters of these fatty acids, e.g. obtained from transesterification of the natural triglycerides.

For example, as a fatty alcohol from natural sources, the fatty alcohol NAFOL1822 commercially available from Sasol is a suitable fatty alcohol.

Preferably, the fatty alcohol from Ziegler synthesis is a fatty alcohol mixture from Ziegler synthesis. The fatty alcohol mixture from Ziegler synthesis may comprise predominantly C6 to C30 alcohols (greater 50wt%), based on the total weight of the fatty alcohol mixture from Ziegler synthesis.

The synthetic fatty alcohol mixture from Ziegler synthesis may comprise primary, saturated, linear, and/or branched fatty alcohols.

Preferably, the fatty alcohol mixture from Ziegler synthesis is an alcohol mixture comprising predominantly C16 to C30 alcohols (greater 50wt%). More preferably, the fatty alcohol mixture from Ziegler syntheses is a fatty alcohol mixture comprising predominantly C16 to C30 linear alcohols (greater 50wt%), based on the total weight of the fatty alcohol mixture from Ziegler synthesis. Most preferably, the synthetic fatty alcohol mixture from Ziegler synthesis comprises predominantly C16 to C30 linear primary alcohols (greater 50wt%), based on the total weight of the fatty alcohol mixture from Ziegler synthesis.

The skilled person will appreciate that the synthetic fatty alcohol mixture from Ziegler synthesis comprises linear primary alcohols with even-numbered carbon chain lengths.

Thus, preferably, the fatty alcohol mixture from Ziegler synthesis is a fatty alcohol mixture comprising 98 mol% or more even-numbered carbon chain lengths.

The fatty alcohol mixture from Ziegler synthesis may have a solidification point of 50°C or more measured according to the Shukoff method.

For example, the alcohol NAFOL 20+ commercially available from Sasol is a suitable fatty alcohol from Ziegler synthesis.

The emulsifier may be a non-ionic surfactant. The non-ionic surfactant may be an alcohol alkoxylate. Preferably, the emulsifier is an alcohol ethoxylate.

The alcohol of the alcohol ethoxylate may be a C10 to C18 alcohol. Preferably, the alcohol of the alcohol ethoxylate is a C12 to C14 alcohol. Preferably, the alcohol of the alcohol ethoxylate comprises 50 mol% or more branched alcohols. The alcohol here means the alcohol group of the alcohol ethoxylate or in other words the alcohol ethoxylated to form the alcohol ethoxylate.

The alcohol ethoxylate may have an ethoxylation degree of 8 to 60 (number average), preferably an ethoxylation degree of 30 to 50 (number average) or more preferred an ethoxylation degree of 38 to 42 (number average).

In one embodiment of the invention, the emulsifier is a C13 alcohol ethoxylate, preferably a branched C13 alcohol ethoxylate, with an ethoxylation degree of 38 to 42 (number average), preferably a branched C13 alcohol ethoxylate with an ethoxylation degree of 38 to 42 (number average).

For example, the emulsifier TRIDAC ISO 40-70 commercially available from Sasol is a suitable emulsifier.

The defoamer composition may preferably comprise from 0.2 to 2wt% of the emulsifier, for example about 1wt% of the emulsifier, based on the total weight of the defoamer composition.

The thickener may be a polysaccharide, preferably Xanthan gum.

The defoamer composition may further comprise a distillation residue.

Where the defoamer composition comprises the distillation residue, the defoamer composition may comprise from 1 to 10wt% of the distillation residue, preferably from 2 to 7wt% of the distillation residue, for example about 5wt% of the distillation residue, based on the total weight of the defoamer composition.

If the distillation residue comprises fatty alcohols, these fatty alcohols do not form part of the fatty alcohol mixture but are additional fatty alcohols. Any amount of fatty alcohols contained in the distillation residue are thus considered to be additional fatty alcohols in the defoamer composition and are not considered to contribute to the weight of the fatty alcohol mixture in the defoamer composition or to contribute to the amounts of the C18 alcohol; the C20 alcohol; and the C22 alcohol in the fatty alcohol mixture, each as defined herein. That an amount of fatty alcohols is additional only applies to fatty alcohols contained in the distillation residue.

The distillation residue may be a distillation residue obtained from the production of Ziegler alcohols, a distillation residue obtained from the production of natural fatty alcohols derived from the hydrogenation of natural fatty acids, or a mixture thereof.

The distillation residue obtained from the production of Ziegler alcohols may comprise:

50 to 85wt% C18 to C30 linear alcohols;
3 to 20wt% C18 to C30 branched alcohols;
0.7 to 4wt% C20 to C32 paraffins;
4 to 12wt% C20 to C40 esters; and
1 to 7wt% C22 to C40 ethers, based on the total weight of the distillation residue.

The C18 to C30 linear alcohols may comprise:

30 to 45wt% C20 linear alcohols;
21 to 39wt% C22 linear alcohols;
4 to 12wt% C24 linear alcohols; and
1 to 7wt% C26 linear alcohols, based on the total weight of the C18 to C30 linear alcohols.

In one preferred embodiment, the distillation residue obtained from the production of Ziegler alcohols comprises:

70 to 85wt% C18 to C30 linear alcohols;
3 to 12wt% C18 to C30 branched alcohols;
0.7 to 2.5wt% C20 to C32 paraffins;
4 to 9wt% C20 to C40 esters; and
1 to 6wt% C22 to C40 ethers, based on the total weight of the distillation residue.

The C18 to C30 linear alcohols comprises:

30 to 45wt% C20 linear alcohols;
21 to 39wt% C22 linear alcohols;
4 to 12wt% C24 linear alcohols; and
1 to 7wt% C26 linear alcohols, based on the total weight of the C18 to C30 linear alcohols.

In another preferred embodiment, the distillation residue obtained from the production of Ziegler alcohols comprises:

50 to 70wt% C18 to C30 linear alcohols;
12 to 20wt% C18 to C30 branched alcohols;
1 to 4wt% C20 to C32 paraffins;
6 to 12wt% C20 to C40 esters; and
0.5 to 4wt% C22 to C40 ethers, based on the total weight of the distillation residue.

The C18 to C30 linear alcohols comprises:

25 to 35wt% C20 linear alcohols;
10 to 20wt% C22 linear alcohols;
4 to 12wt% C24 linear alcohols; and
1 to 7wt% C26 linear alcohols, based on the total weight of the C18 to C30 linear alcohols.

The distillation residue obtained from the production of natural fatty alcohols derived from the hydrogenation of natural fatty acids may comprise:

10 to 60wt% C16 to C26 linear alcohols;
30 to 80wt% C24 to C46 esters;
1 to 10wt% C24 to C46 ethers;
0 to 2wt% C16 to C40 paraffins;
0 to 3wt% C16 to C26 aldehydes; and
0 to 5wt% steranes, based on the total weight of the distillation residue.

The steranes may be of plant origin.
The defoamer composition hereinbefore described is useful in the processing of paper pulp, for example as an additive in the processing of paper pulp.
According to another aspect of the invention, there is provided a method for mitigating foaming in an aqueous system, the method comprising adding the defoamer composition as hereinbefore described to the aqueous system.
The defoamer composition may be added to the aqueous system in an amount of from 0.01 to 0.2wt%, preferably in an amount of from 0.03 to 0.1wt%, based on the total weight of the defoamer composition.
The aqueous system may be a pulp slurry as used in paper production.
According to yet another aspect of the invention, there is provided the use of the defoamer composition as hereinbefore described to mitigate foaming in an aqueous system.
The defoamer composition may be added to the aqueous system in an amount of from 0.01 to 0.2wt%, preferably in an amount of from 0.03 to 0.1wt%, based on the total weight of the aqueous system.

The aqueous system may be a pulp slurry as used in paper production.

According to another aspect of the invention, there is provided a method of formulating a defoamer composition, the method comprising an emulsifying step, wherein

at least the fatty alcohols comprising at least the C18 alcohol, the C20 alcohol, and the C22 alcohol, the thickener and the water are emulsified using the emulsifier, thereby to produce the defoamer composition as hereinbefore described. Preferably at least the fatty alcohols, the thickener and the water are combined at an elevated temperature of above 50°C, more preferably at a temperature where all the fatty alcohols are in a liquid state, to obtain an emulsion or dispersion while stirring and a dispersion after cooling.

The method may further comprise adding the distillation residue as hereinbefore described at any time before or during the emulsifying step thereby to produce the defoamer composition as hereinbefore described additionally comprising the distillation residue, where any component of the distillation residue that is also in the defoamer composition increases the relative amounts as hereinbefore described in the defoamer composition.

Where the method includes providing a distillation residue, the defoamer composition may comprise from 1 to 10wt% of the distillation residue, preferably from 2 to 7wt% of the distillation residue, for example about 5wt% of the distillation residue, based on the total weight of the defoamer composition.

Each of the fatty alcohol mixture, the emulsifier, the thickener, and/or the distillation residue including the relative amounts thereof are as hereinbefore described (including any preferred embodiment described hereinbefore).

According to another aspect of the invention, there is provided a defoamer composition obtainable by the method hereinbefore described.

EXPERIMENTAL RESULTS

The invention will now be described with reference to the following non-limiting examples.

Methods

The following methods were used to conduct the analyses:

Brookfield viscosity was determined by using a spindle LV-3 rotating at 60 revolutions per minute. The Brookfield viscometer determines viscosity by measuring the force to turn the spindle in the solution at a given rate (Brookfield DV III Ultra, spindle LV set).

Mean particle size ($\mu$m) was determined with static laser light scattering according to ISO 13320, evaluation according to Mie theory.

The HORIBA laser scattered light spectrometer LA-960 measures the particle size distribution of an emulsion or suspension according to the principle of static laser light scattering (SLS). The intensity of the light diffracted or reflected by the particles is measured as a function of the scattering angle. The LA-960 uses a combination of a red laser diode (650 nm, 5 mW) and a blue LED (405 nm, 3 mW) for the measurement. The signals are used to evaluate the particle size distribution according to Mie. The particle size distribution reported is the volume average particle size distribution in micrometres ($\mu$m).

Shear viscosity was determined with an Anton Paar MCR 302 rheometer. For particle dispersions/suspensions a plate-plate geometry (PP50/TG) was used.

Hysteresis from $0.1\,s^{-1}$ at up to $100\,s^{-1}$ and at up to $1000\,s^{-1}$ was determined according to the following procedure: Viscosity measurements are first carried out with a logarithmically increasing shear rate and then with a logarithmically decreasing shear rate. In case both so-called flow curves are identical, samples are classified as non-thixotropic and no hysteresis area could be determined. For non-identical flow curves the corresponding integrals of the upward and downward flow curves are calculated and subtracted to determine the associated hysteresis area. For the ease of evaluation, these values are set in relation to get a result in percent. Temperature equilibration of the sample is conducted for 30 minutes and also serves as a resting phase for the sample. If no other temperature is specified, samples are measured at 25°C. The actual measurement, which is divided into 9 actions, is described below:

1. Starting shear: $0.1\,s^{-1}$ for 1min
2. Flow curve1: 0.1 to $100\,s^{-1}$, 61 datapoints, logarithmic
3. Breakpoint1: $100\,s^{-1}$ for 1 min
4. Flow curve2: 100 to $0.1\,s^{-1}$, 61 datapoints, logarithmic
5. Breakpoint2: $0.1\,s^{-1}$ for 1min
6. Flow curve3: 0.1 to $1000\,s^{-1}$, 81 datapoints, logarithmic
7. Breakpoint3: $1000\,s^{-1}$ for 1min
8. Flow curve 4: 1000 to $0.1\,s^{-1}$, 81 datapoints, logarithmic
9. Final shear: $0.1\,s^{-1}$ for 1min

The shear viscosity at 1s⁻¹ and 10s⁻¹ are taken from the first flow curve (Action 2).

Yield point was determined according to the tangent intersection method. In the area of low shear stress or deformation, the measurement curve [lg$\gamma$ = f(lg$\sigma$)] usually has a constant slope. With a stable sample structure, this first section of the curve shows the behaviour of a solid ($\gamma$ and $\sigma$ are proportional to one another). When the yield point is exceeded, the deformation increases significantly. The yield point can then be determined from the intersection of the tangents on the two branches of the curve.

Analytical centrifuge experiments were performed with a Lumisizer6112-110 from LUM. The Lumisizer 6112-110 combines a computer-controlled high-performance centrifuge with an optical measurement system (NIR light source and high-resolution linear receiver) to record the transmission profiles of the samples over the entire sample length. The analyser accelerates the segregation at variable speeds and allows fast stability tests as well as consolidation investigations in highly concentrated dispersions. The time-dependent transmission profile of the sample is measured at rotation speeds of 1000 rpm, 2000 rpm, 3000 rpm and 4000 rpm. The relative centrifugal force (RCF) was calculated according to the following equation:

$$RCF = \left(\frac{RPM}{1000}\right)^2 \cdot r \cdot 1.118$$

where r corresponds to the radius of the rotor (130 mm). The dispersion stability is evaluated by the determined separation velocity. All experiments were carried out twice. The relative centrifugation force is subsequently used to extrapolate the separation profile to earth gravity which gives the so-called real-time separation. From the real-time separation profile, the indicated separation time is the on-set point of phase separation. The separation speed is calculated from the corresponding slope.

Solidification point was determined according to the Shukoff method. The Shukoff method comprises pouring the sample to be analysed into a Shukoff flask and adding a small magnetic stirring rod. A thermometer is inserted into the vessel so that the tip reaches the centre of the vessel. While stirring, the sample is cooled down slowly. As the sample solidifies (crystallizes), the crystallization causes a brief increase in the measured temperature. The highest temperature value is determined, which usually remains at the maximum for a few minutes. This temperature is given as the solidification point.

Experiments

Five different fatty alcohol mixtures (Alcohol Mixtures A to E) were used to formulate various defoamer compositions. The alcohol mixtures used in the various defoamer compositions are described in Table 1.

Table 1

| Alcohol (linear) | | Alcohol Mixture A (natural) | Alcohol Mixture B (natural) | Alcohol Mixture C (natural & synthetic) | Alcohol Mixture D (synthetic) | Alcohol Mixture E (commercial product) |
|---|---|---|---|---|---|---|
| C16 OH | wt% | 9.4 | 0 | 0 | 0.1 | 4.0 |
| C18 OH | wt% | 42.4 | 49 | 28.2 | 3.2 | 38.9 |
| C20 OH | wt% | 7.6 | 0.5 | 37.1 | 57.4 | 8.1 |
| C22 OH | wt% | 40.1 | 50 | 34.2 | 38.6 | 45.5 |
| C24 OH | wt% | 0.4 | 0.4 | 0.5 | 0.7 | 1.1 |
| Solidification Point | °C | 56.8 | 59.4 | 55.7 | 56.8 | 59.1 |

Alcohol Mixture A and Alcohol Mixture B are C18 to C22 alcohol mixtures from a natural source, NAFOL 1822PD and NAFOL 1822SD respectively, commercially available from Sasol.

Alcohol Mixture C is a fatty alcohol mixture comprising both a naturally sourced C18 to C22 alcohol mixture and C18 to C22 alcohol mixture from Ziegler synthesis.

Alcohol Mixture D is a C20 to C22 alcohol mixture from Ziegler synthesis, NAFOL 2022A, commercially available from Sasol. Alcohol Mixture E is STENOL 1822 45B comprising predominantly behenyl (C22) alcohol used in paper pulp applications, commercially available from BASF. In a first set of experiments, five defoamer compositions were prepared according to the specification set out in Table 2.

The defoamer compositions were prepared as follows:

Phase A: The alcohol was placed into an autoclave and the temperature was set to 80°C.

Phase B: Water and emulsifier were weighed into a 2-litre glass beaker and the temperature was set to 80°C.

Phase C: Xanthan gum was added to water in a 1-litre glass beaker. The mixture was left at room temperature for 1 hour.

Phase B was added to Phase A while stirring at 500 rpm. This mixture was treated with an Ultraturax St6 at 200 rpm for 3 minutes and cooled to 55°C. Phase C was added to the mixture of Phase A and Phase B while stirring at 500 rpm. The resulting mixture was treated for 60 seconds with an Ultraturax St6 at 200 rpm. The autoclave was evacuated with a vacuum pump to 150 mbar. The product was rapidly cooled by draining it into a 1-litre Schott flask cooled with ice water.

## Table 2

| | Comparative Defoamer Composition 1 | Comparative Defoamer Composition 2 | Inventive Defoamer Composition 3 |
|---|---|---|---|
| Alcohol | 30wt% Alcohol Mixture A | 30wt% Alcohol Mixture B | 30wt% Alcohol Mixture C |
| Emulsifier | 1wt% TRIDAC ISO 40-70 | | |
| Thickener | 0.15wt% Xanthan gum | | |
| Water | 68.85wt% | | |

| | Comparative Defoamer Composition 4 | Reference Defoamer Composition 5 |
|---|---|---|
| Alcohol | 30wt% Alcohol Mixture D | 30wt% Alcohol Mixture E |
| Emulsifier | 1wt% TRIDAC ISO 40-70 | |
| Thickener | 0.15wt% Xanthan gum | |
| Water | 68.85wt% | |

TRIDAC ISO 40-70 is an emulsifier commercially available from Sasol.

In a second set of experiments, a further five defoamer compositions were prepared according to the specifications set out in Table 3. The same method to produce the defoamer compositions was used as described above.

## Table 3

| | Comparative Defoamer Composition 6 | Comparative Defoamer Composition 7 | Inventive Defoamer Composition 8 |
|---|---|---|---|
| Alcohol | 25wt% Alcohol Mixture A | 25wt% Alcohol Mixture B | 25wt% Alcohol Mixture C |
| Emulsifier | 1wt% TRIDAC ISO 40-70 | | |
| Thickener | 0.15wt% Xanthan gum | | |
| Distillation residue | 5wt% distillation residue of natural fatty alcohol production | | |
| Water | 68.85wt% | | |

| | Comparative Defoamer Composition 9 | Reference Defoamer Composition 10 |
|---|---|---|
| Alcohol | 25wt% Alcohol Mixture D | 25wt% Alcohol Mixture E |
| Emulsifier | 1wt% TRIDAC ISO 40-70 | |
| Thickener | 0.15wt% Xanthan gum | |
| Distillation residue | 5wt% distillation residue of natural fatty alcohol production | |
| Water | 68.85wt% | |

At intervals of 1 day, 7 days, 14 days, and 30 days, each of the defoamer compositions was tested for Brookfield viscosity and mean particle size. Mean particle size was determined at room temperature of about 20°C.

In addition, each defoamer composition was tested for mechanical stability (hysteresis, and yield point) and storage stability (separation characteristics).

The results of the analysis of the various defoamer compositions are shown in Table 5 (Defoamer Compositions 1 to 5) and Table 6 (Defoamer Compositions 6 to 10).

Table 5

| | Units | Defoamer Composition 1 | Defoamer Composition 2 | Defoamer Composition 3* | Defoamer Composition 4 | Defoamer Composition 5 |
|---|---|---|---|---|---|---|
| Brookfield viscosity | mPas | | | | | |
| 1d | | 254 | paste | 234 | paste | 460 |
| 7d | | 938 | - | 212 | - | 1000 |
| 14 d | | paste | - | 206 | - | paste |
| 30 d | | - | - | 218 | - | paste |
| Mean particle size | $\mu$m, D50 | | | | | |
| 1 d | | 2.6 | - | 2.6 | - | 3.2 |
| 7 d | | 3.0 | - | 2.5 | - | 6.3 |
| 14 d | | - | - | 2.6 | - | - |
| 30 d | | - | - | 2.5 | - | - |
| Rheology [Mechanical stability] | | | | | | |
| hysteresis up to 100 $s^{-1}$ (pumping) | % | 57 | - | 28 | - | - |
| hysteresis up to 1000$s^{-1}$ (spraying) | % | 29 | - | 32 | - | - |
| yield point | Pa | - | - | 15 | - | 42 |
| Lumifuge [Storage stability] | | | | | | |
| separation after | day | - | - | 44.8 | - | - |
| separation speed | mm/day | - | - | 0.017 | - | |
| (*) = inventive defoamer composition, (-) = not measurable due to paste formation | | | | | | |

Defoamer Compositions 2 and 4 do not form stable dispersions where a liquid is the continuous phase, but rather form pastes and hence no measurements were possible. Defoamer Compositions 1 and 5 form stable dispersions, but only for a period of 14 days, whereafter pastes are formed.

The results clearly show that Defoamer Composition 3 (the inventive defoamer composition) produces a stable dispersion over at least thirty days, where at least water is the continuous phase and at least the fatty alcohol mixture (being present in a solid particulate form) forms the dispersed phase. Separation for Defoamer Composition 3 was only observed after 44.8 days. Furthermore, inventive Defoamer Composition 3 has a slightly lower Brookfield viscosity than Defoamer Composition 1 and Defoamer Composition 5 after 1 day but has a vastly lower Brookfield viscosity after 14 days. This is advantageous, e.g. in terms of the energy required for pumping the formulation. The hysteresis and yield point of Defoamer Composition 3 are also more favourable than Defoamer Composition 1.

Defoamer Composition 6 forms a stable dispersion but becomes much more viscous with storage time. Defoamer Compositions 7 and 9 form viscous dispersions which quickly become a paste. Defoamer Composition 10 forms a stable dispersion with viscosity in the range of 240 to 320mPas. On the other hand, inventive Defoamer Composition 8 forms a stable dispersion with a lower viscosity than Defoamer Composition 10. The mechanical stability of Defoamer Composition 8 is much better than Defoamer Composition 10, which makes Defoamer Composition 8 more desirable/suitable for commercial applications.

When comparing Defoamer Composition 8 with Defoamer Composition 3, the beneficial effect of the distillation residue added to Defoamer Composition 8 is evident in the slightly lower viscosity and improved mechanical stability.

Overall, the analyses show that the inventive defoamer compositions of Defoamer Compositions 3 and 8 which comprise the fatty alcohol mixture as defined in claim 1 are preferred in that they exhibit much better emulsion/dispersion stability and improved mechanical stability compared to other defoamer compositions, which do not include the fatty alcohol mixture as defined in claim 1.

Table 6

| | Units | Defoamer Composition 6 | Defoamer Composition 7 | Defoamer Composition 8* | Defoamer Composition 9 | Defoamer Composition 10 |
|---|---|---|---|---|---|---|
| Brookfield viscosity ] | mPas | | | | | |
| 1d | | 198 | 4600 | 196 | 406 | 320 |
| 7d | | 180 | paste | 178 | paste | 290 |
| 14 d | | no data | - | no data | - | 244 |
| 30 d | | 1750 | - | 180 | - | 262 |
| Mean particle size | $\mu$m, D50 | | | | | |
| 1 d | | 2.8 | 3.8 | 2.6 | 2.8 | 2.5 |
| 7 d | | 2.7 | - | 2.6 | - | 2.5 |
| 14 d | | no data | - | 2.6 | - | 2.5 |
| 30 d | | 3.3 | - | 2.6 | - | 2.5 |
| Rheology [Mechanical stability] | | | | | | |
| hysteresis up to 100 s$^{-1}$ (pumping) | % | 28 | - | 0.6 | - | 26.8 |
| hysteresis up to 1000s$^{-1}$ (spraying) | % | 9 | - | 3 | - | 27.6 |
| yield point | Pa | 0 | - | 0 | - | 42 |
| Lumifuge [Storage stability] | | | | | | |
| separation after | day | 38.0 | - | 52.7 | - | - |
| separation speed | mm/day | 0.011 | - | 0.045 | - | - |
| (*) inventive defoamer composition | | | | | | |

Advantages of the Invention

Advantageously, the defoamer compositions according to the invention have lower viscosity, improved emulsion/dispersion stability, lower shear hysteresis (i.e. improved ability to handle mechanical shear), and reduced phase separation during storage, compared to prior art defoamer compositions, as well as to deaerators which do not comprise the fatty alcohol mixture as defined in claim 1. The addition of the distillation residue further enhances the benefits observed.

**Claims**

1. A defoamer composition, the defoamer composition comprising:

    (a) 20 to 40wt% of a fatty alcohol mixture, based on the total weight of the defoamer composition, the fatty alcohol mixture comprising

        25 to 35wt% C18 alcohol;
        30 to 45wt% C20 alcohol; and
        25 to 45wt% C22 alcohol,
        each based on the total weight of the fatty alcohol mixture;

    (b) 0.1 to 5wt% of an emulsifier, based on the total weight of the defoamer composition;
    (c) 0.01 to 1wt% of a thickener, based on the total weight of the defoamer composition; and
    (d) water making up the remainder of the defoamer composition to 100wt%.

2. The defoamer composition as claimed in claim 1, wherein the fatty alcohol mixture comprises:

    10 to 90wt% fatty alcohol(s) from natural sources; and
    90 to 10wt% fatty alcohol(s) from Ziegler alcohol synthesis,

    based on the total weight of the fatty alcohol mixture.

3. The defoamer composition as claimed in claim 1 or claim 2, where at least one of:

    the C18 alcohol, the C20 alcohol, and
    the C22 alcohol of the fatty alcohol mixture is a primary, saturated, and linear alcohol, preferably all three of the C18, the C20 and the C22 alcohol of the fatty alcohol mixture are primary, saturated and linear alcohols.

4. The defoamer composition as claimed in any one of claims 1 to 3, wherein the fatty alcohol mixture has a solidification point measured according to the Shukoff method in the range of from 50°C to 70°C, preferably in the range of from 50°C to 60°C, most preferably in the range of from 54°C to 58°C.

5. The defoamer composition as claimed in any one of claims 2 to 4, wherein the fatty alcohol from natural sources is a fatty alcohol mixture from natural sources comprising C6 to C28 alcohols, preferably comprising predominantly C18 to C22 alcohols, based on the total weight of the natural fatty alcohol mixture.

6. The defoamer composition as claimed in any one of claims 2 to 5, wherein the fatty alcohol mixture from natural sources comprises predominantly C18 to C22 linear alcohols, preferably predominantly C18 to C22 linear primary alcohols, based on the total weight of the natural fatty alcohol mixture.

7. The defoamer composition as claimed in any one of claims 2 to 6, wherein the fatty alcohol mixture from natural sources has a solidification point of 50°C or more measured according to the Shukoff method.

8. The defoamer composition as claimed in any one of claims 2 to 7, wherein the fatty alcohol from Ziegler alcohol syntheses is an alcohol mixture from Ziegler alcohol syntheses comprising predominantly C6 to C30 alcohols, based on the total weight of the fatty alcohol mixture from Ziegler synthesis.

9. The defoamer composition as claimed in claim 9, wherein the fatty alcohol mixture from Ziegler alcohol syntheses comprises predominantly C16 to C30 alcohols, more preferably predominantly C16 to C30 linear alcohols, and most preferably predominantly C16 to C30 linear primary alcohols, based on the total weight of the fatty alcohol mixture from Ziegler synthesis.

10. The defoamer composition as claimed in claim 8 or claim 9, wherein the fatty alcohol mixture from Ziegler alcohol syntheses has a solidification point 50°C or more measured according to the Shukoff method.

11. The defoamer composition as claimed in any one of claims 1 to 10, wherein the emulsifier is an alcohol alkoxylate, preferably an alcohol ethoxylate.

12. The defoamer composition as claimed in claim 11, wherein the alcohol ethoxylate has a C10 to C18 alcohol group, preferably a C12 to C14 alcohol group.

13. The defoamer composition as claimed in claim 11 or claim 12, wherein the alcohol ethoxylate has an ethoxylation degree of 8 to 60 (number average), preferably an ethoxylation degree of 30 to 50 (number average).

14. The defoamer composition as claimed in any one of the claims 1 to 13, wherein the defoamer composition further comprises from 1 to 10wt% of a distillation residue, preferably from 2 to 7wt% of the distillation residue, based on the total weight of the defoamer composition.

15. The defoamer composition as claimed in claim 14, wherein the distillation residue is a distillation residue obtained from the production of Ziegler alcohols, a distillation residue obtained from the production of natural fatty alcohols derived from the hydrogenation of natural fatty acids, or a mixture thereof.

16. The defoamer composition as claimed in claim 15, wherein the distillation residue obtained from the production of Ziegler alcohols comprises:

    50 to 85wt% C18 to C30 linear alcohols;
    3 to 20wt% C18 to C30 branched alcohols;
    0.7 to 4wt% C20 to C32 paraffins;
    4 to 12wt% C20 to C40 esters; and
    1 to 7wt% C22 to C40 ethers, based on the total weight of the distillation residue.

17. The defoamer composition as claimed in claim 15 or claim 16, wherein the distillation residue obtained from the production of natural fatty alcohols derived from the hydrogenation of natural fatty acids comprises:

    10 to 60wt% C16 to C26 linear alcohols;
    30 to 80wt% C24 to C46 esters;
    1 to 10wt% C24 to C46 ethers;
    0 to 2wt% C16 to C40 paraffins;
    0 to 3wt% C16 to C26 aldehydes; and
    0 to 5wt% steranes,

    each based on the total weight of the distillation residue.

18. A method for mitigating foaming in an aqueous system, the method comprising adding the defoamer composition as claimed in any one of claims 1 to 17 to the aqueous system, wherein the defoamer composition is added to the aqueous system in an amount of from 0.01 to 0.2wt%, preferably in an amount of from 0.03 to 0.1wt%, based on the total weight of the aqueous system and the emulsion deaerator, and wherein the aqueous system preferably is a pulp slurry as used in paper production.

19. Use of the defoamer composition as claimed in any of claims 1 to 17 to mitigate foaming in an aqueous system, preferably in a pulp slurry as used in paper production.

**Europäisches Patentamt**
**European Patent Office**
**Office européen des brevets**

# EUROPEAN SEARCH REPORT

Application Number

**EP 23 18 0771**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 679 286 A (WOLLENWEBER HORST-WERNER [DE]) 21 October 1997 (1997-10-21) * columns 2-4 * * example 1A * | 1-19 | INV. B01D19/04 D21C3/28 D21H21/12 |
| A | US 2014/107229 A1 (KORMANN CLAUDIUS [DE] ET AL) 17 April 2014 (2014-04-17) * paragraphs [0005], [0007], [0018], [0088], [0095], [0096] * | 1-19 | |
| A | US 2013/303635 A1 (GASCHLER WOLFGANG [DE]) 14 November 2013 (2013-11-14) * paragraphs [0005], [0007], [0075] * | 1-19 | |
| A | US 6 534 550 B1 (WALTERICK JR GERALD C [US]) 18 March 2003 (2003-03-18) * column 4, lines 55-60 * * claim 10 * | 1-19 | |
| A | US 2016/265162 A1 (KERN HOLGER [DE] ET AL) 15 September 2016 (2016-09-15) * paragraph [0035] * | 1-19 | TECHNICAL FIELDS SEARCHED (IPC) |
| A | DE 30 01 387 A1 (STOCKHAUSEN & CIE CHEM FAB [DE]) 23 July 1981 (1981-07-23) * page 6, line 25 - page 7, line 3 * | 1-19 | B01D D21H |

The present search report has been drawn up for all claims

| Place of search | Date of completion of the search | Examiner |
|---|---|---|
| The Hague | 12 December 2023 | Van Ganswijk, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 0771

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2023

| Patent document cited in search report | | Publication date | Patent family member(s) | | Publication date |
|---|---|---|---|---|---|
| US 5679286 | A | 21-10-1997 | AT | E150660 T1 | 15-04-1997 |
| | | | DE | 4313947 A1 | 03-11-1994 |
| | | | DK | 0696224 T3 | 13-10-1997 |
| | | | EP | 0696224 A1 | 14-02-1996 |
| | | | ES | 2100061 T3 | 01-06-1997 |
| | | | FI | 955087 A | 25-10-1995 |
| | | | GR | 3023566 T3 | 29-08-1997 |
| | | | JP | H08510160 A | 29-10-1996 |
| | | | NO | 305788 B1 | 26-07-1999 |
| | | | US | 5679286 A | 21-10-1997 |
| | | | WO | 9425137 A1 | 10-11-1994 |
| US 2014107229 | A1 | 17-04-2014 | CN | 103547350 A | 29-01-2014 |
| | | | EP | 2707116 A1 | 19-03-2014 |
| | | | US | 2014107229 A1 | 17-04-2014 |
| | | | WO | 2012152810 A1 | 15-11-2012 |
| US 2013303635 | A1 | 14-11-2013 | BR | 112013016680 A2 | 04-10-2016 |
| | | | CA | 2821380 A1 | 19-07-2012 |
| | | | CN | 103298999 A | 11-09-2013 |
| | | | EP | 2663689 A1 | 20-11-2013 |
| | | | ES | 2525942 T3 | 02-01-2015 |
| | | | JP | 2014503663 A | 13-02-2014 |
| | | | US | 2013303635 A1 | 14-11-2013 |
| | | | WO | 2012095393 A1 | 19-07-2012 |
| US 6534550 | B1 | 18-03-2003 | AR | 027579 A1 | 02-04-2003 |
| | | | AU | 3683501 A | 08-10-2001 |
| | | | AU | 4776301 A | 08-10-2001 |
| | | | AU | 2001236835 B2 | 13-10-2005 |
| | | | BR | 0109797 A | 21-01-2003 |
| | | | CA | 2404708 A1 | 04-10-2001 |
| | | | CN | 1430691 A | 16-07-2003 |
| | | | EP | 1268933 A1 | 02-01-2003 |
| | | | JP | 2003528718 A | 30-09-2003 |
| | | | KR | 20020087445 A | 22-11-2002 |
| | | | TW | I237081 B | 01-08-2005 |
| | | | US | 6534550 B1 | 18-03-2003 |
| | | | WO | 0173201 A1 | 04-10-2001 |
| | | | WO | 0173202 A1 | 04-10-2001 |
| US 2016265162 | A1 | 15-09-2016 | BR | 112016010920 A2 | 08-08-2017 |
| | | | CA | 2927406 A1 | 28-05-2015 |
| | | | CN | 105722574 A | 29-06-2016 |
| | | | EP | 3071311 A1 | 28-09-2016 |
| | | | US | 2016265162 A1 | 15-09-2016 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

**EP 23 18 0771**

This annex lists the patent family members relating to the patent documents cited in  the above-mentioned European search report.
The members are as contained in the European Patent Office EDP file on
The European Patent Office is in no way liable for these particulars which are merely given for the purpose of information.

**12-12-2023**

| Patent document cited in search report | Publication date | Patent family member(s) | Publication date |
|---|---|---|---|
| | | WO 2015075618 A1 | 28-05-2015 |
| DE 3001387 A1 | 23-07-1981 | NONE | |

EPO FORM P0459